# EUROPEAN PATENT APPLICATION

(11) **EP 3 243 596 A1**
(43) Date of publication of application: **15.11.2017**
(21) Application number: 16791292.2
(22) Date of filing: 31.03.2016
(51) Int. Cl.: B23K 11/36, B23K 11/30

(54) **ELECTRODE CHIP REMOVAL DEVICE**

(71) Applicant: Kyokutoh Co., Ltd., Aichi 458-0808 (JP)
(72) Inventor: NAKAJIMA, Kotaro, Nagoya-shi Aichi 4580808 (JP)
(74) Representative: BRP Renaud & Partner mbB Rechtsanwälte Patentanwälte Steuerberater
(86) International application number: PCT/JP2016/001879
(87) International publication number: WO 2017/168468

(57) **Abstract**

A rotation arm (3) has, at its one end, a pair of first slits (31b) configured to guide associated protrusions (2f) of the other one of removing members (2) such that the removing members (2) are separated from each other in the center axis direction (C1) by pressing both of nails (2d) downward with a large-diameter portion (11a) of a welding gun (11) to rotate the rotation arm (3). A body frame (4) has a second guide (13) configured to guide the rotation arm (3) such that when the rotation arm (3) rotates, a central portion of each removing member (2) between the associated protrusions (2f) moves along the center axis (11c).

## Description

### TECHNICAL FIELD

The present invention relates to an electrode tip remover to remove an electrode tip mounted to a tip of a welding gun for use in spot welding from the tip of the welding gun.

### BACKGROUND ART

In general, a tip of a welding gun for use in spot welding has a cylindrical large-diameter portion, and a cylindrical small-diameter portion which has the same center axis as, and is connected to, the large-diameter portion, and to which an electrode tip is fitted such that a gap is formed between the electrode tip and the large-diameter portion.

The electrode tip has a distal end portion that may be worn or coated with an oxide film or any other film (i.e., degraded) if welding is performed a predetermined number of times. This causes the need for periodically cutting the distal end portion with a tip dresser. The electrode tip periodically cut has its total length gradually decreased, and finally becomes unusable. Thus, the electrode tip needs to be removed from the small-diameter portion of the welding gun at a predetermined timing, and a new electrode tip needs to be mounted to the small-diameter portion of the welding gun.

To easily remove the electrode tip from the welding gun, an electrode tip remover is used. For example, an electrode tip remover disclosed in Patent Document 1 includes a rotation arm extending substantially horizontally and having one end including a tip removing portion, and a body frame that axially supports the other end of the rotation arm such that the rotation arm is rotatable upward and downward. The tip removing portion is provided with a plate-like nail, which has an opening facing away from the body frame and is substantially U-shaped as viewed in plan. If the welding gun is moved downward while the nail is inserted into the gap with the electrode tip located below the large-diameter portion, the large-diameter portion of the welding gun presses the nail downward to rotate the rotation arm downward. This rotation allows the tip and base ends of the nail to gradually move in opposite vertical directions and to be away from each other. As a result, the tip end of the nail presses the electrode tip in a direction away from the large-diameter portion, and the base end of the nail is pressed against the large-diameter portion, thereby removing the electrode tip from the small-diameter portion.

### CITATION LIST

### PATENT DOCUMENT

Patent Document 1: Japanese Unexamined Patent Publication No. 2010-17764

### SUMMARY OF THE INVENTION

### TECHNICAL PROBLEM

In Patent Document 1, inclining the nail allows the electrode tip to be removed from the small-diameter portion, and during this removal action, force is applied from the nail to the large-diameter and small-diameter portions of the welding gun in a direction intersecting with the center axis of the large-diameter and small-diameter portions. Thus, to remove the electrode tip from the small-diameter portion, a greater force than a minimum force required to move the electrode tip along the center axis of the large-diameter and small-diameter portions needs to be applied to the electrode tip. In addition, repeating the removal action may cause the large-diameter and small-diameter portions to be deformed or damaged.

In view of the foregoing background, it is therefore an object of the present invention to provide an electrode tip remover that may perform a removal action without applying excess force and may prevent a welding gun from being deformed or damaged.

### SOLUTION TO THE PROBLEM

To achieve the object, the present invention is devised to, during a removal action, apply force to large-diameter and small-diameter portions and an electrode tip along a cross section passing through the center axis of the large-diameter and small-diameter portions.

Specifically, the present invention is directed to an electrode tip remover for removing an electrode tip from a welding gun for use in spot welding. The welding gun has a cylindrical large-diameter portion and a cylindrical small-diameter portion that has the same center axis as, and is connected to, the large-diameter portion. The electrode tip is fitted to the small-diameter portion such that a gap is formed between the electrode tip and the large-diameter portion by moving the electrode tip along a center axis direction of the large-diameter and small-diameter portions. The present invention provides the following solutions.

Specifically, according to a first aspect of the invention, the electrode tip remover includes: a pair of removing members each having a nail and a pair of protrusions, the nail being formed in a shape of a plate and being capable of being inserted into the gap in a direction orthogonal to a thickness direction of the nail, the pair of protrusions protruding in directions away from each other and being arranged symmetrically with respect to the center axis with the nail inserted into the gap, the pair of removing members being arranged symmetrically in the thickness direction of the nail; a rotation arm having two ends, one of the two ends axially supporting the protrusions of one of the removing members, the other one of the two ends including a rotating shaft extending in a direction identical to a direction of extension of the protrusions of the one of the removing members; and a body frame axially supporting the rotating shaft of the rotation arm. The rotation arm has, at the one of the two ends, a pair of first guides configured to guide the associated protrusions of the other one of the removing members such that the removing members are separated from each other in the center axis direction by inserting both of the nails of the removing members close to each other into the gap and pressing both of the removing members to one side in the center axis direction with either the large-diameter portion or the electrode tip to rotate the rotation arm to the other side in the center axis direction about both of the protrusions of the one of the removing members and to rotate the rotation arm to the one side in the center axis direction about the rotating shaft, and the body frame has a second guide configured to guide the rotation arm such that when the rotation arm rotates, a central portion of each removing member between the associated protrusions moves along the center axis.

According to a second aspect of the invention which is an embodiment of the first aspect of the invention, the removing members may each have a fitting recess which opens at a tip end of the removing member and into which the large-diameter portion or the electrode tip is fitted such that if the large-diameter portion and the electrode tip are brought closer to the removing members, the center axis passes through the central portion of the removing member between the associated protrusions, and the nails may be provided in the fitting recess such that a direction of insertion of the nails is opposite to a direction in which the large-diameter portion or the electrode tip is fitted.

According to a third aspect of the invention which is an embodiment of the first or second aspect of the invention, an upper one of the removing members may include a slide member and a biasing member, the slide member being configured to, when the nails of the removing members close to each other are both inserted into the gap, come into contact with the electrode tip to slide in a direction opposite to the direction of insertion of the nails, the biasing member being configured to bias the slide member in the direction of insertion of the nails.

### ADVANTAGES OF THE INVENTION

According to the first aspect of the invention, if a welding gun is moved to one side in the center axis direction of large-diameter and small-diameter portions in a situation where nails of removing members close to each other are both inserted into the gap between the large-diameter portion and an electrode tip, the rotation of a rotation arm allows the removing members to be separated from each other. Thus, the electrode tip is pressed in such a direction to enable the nail of one of the removing members to be separated from the large-diameter portion, and the nail of the other removing member is pressed against the large-diameter portion, thereby removing the electrode tip from the small-diameter portion. During this removal, a central portion of each of the removing members between associated protrusions moves along the center axis of the large-diameter and small-diameter portions. Thus, the rotation of the rotation arm allows the pair of protrusions of each removing member to always apply force from the removing member to the large-diameter portion and the electrode tip along the cross section passing through the center axis of the large-diameter portion and electrode tip from the start of the removal to the end of the removal. Thus, during this removal, no force is applied to the large-diameter and small-diameter portions in the direction intersecting with the center axis of the large-diameter and small-diameter portions. This may prevent the large-diameter and small-diameter portions from being deformed or damaged, and may eliminate the need for excess force during a removal action.

According to the second aspect of the invention, if the removing members are brought closer to the large-diameter portion and electrode tip, the nails are both inserted into the gap between the large-diameter portion and the electrode tip, and the large-diameter portion and the electrode tip are fitted into the associated fitting recesses. Thus, when the removing members are separated from each other, the large-diameter portion and the electrode tip are supported by the associated fitting recesses. This allows the removing members to be separated from each other with stability, resulting in smooth removal of the electrode tip.

According to the third aspect of the invention, if the electrode tip mounted to the small-diameter portion is removed while being positioned to correspond to an upper one of the removing members, the insertion of the nails into the gap between the large-diameter portion and the electrode tip allows the electrode tip to press a slide member, which slides in a direction opposite to the direction of insertion of the nails against the biasing force of a biasing member. If, in this situation, the welding gun is moved to remove the electrode tip, the electrode tip removed is left while being placed on the nail of the upper removing member. However, the electrode tip then falls from the upper removing member, because the biasing force of the biasing member causes the slide member to press the electrode tip in the direction of insertion of the nails. As a result, the electrode tip removed may be easily eliminated from the upper removing member without interfering with the following removal action.

### BRIEF DESCRIPTION OF THE DRAWINGS

[FIG. 1] FIG. 1 is a perspective view of an electrode tip remover according to an embodiment of the present invention.
[FIG. 2] FIG. 2 is a cross-sectional view taken along the plane II-II shown in FIG. 1.
[FIG. 3] FIG. 3 shows a removing member of an electrode tip remover according to an embodiment of the present invention as viewed from the front surface of the removing member.
[FIG. 4] FIG. 4 shows a removing member of an electrode tip remover according to an embodiment of the present invention as viewed from the back surface of the removing member.
[FIG. 5] FIG. 5 corresponds to the cross-sectional view shown in FIG. 2, and shows the state of an electrode tip remover in a situation where an electrode tip has just started being removed.
[FIG. 6] FIG. 6 shows the state of an electrode tip remover in a situation where an electrode tip is being removed after the situation shown in FIG. 5.
[FIG. 7] FIG. 7 shows the state of an electrode tip remover in a situation where an electrode tip has just finished being removed after the situation shown in FIG. 6.
[FIG. 8] FIG. 8 corresponds to a cross-sectional view taken along the plane VIII-VIII shown in FIG. 1 in a situation where an electrode tip remover according to an embodiment of the present invention is used upside down, and shows the state of the electrode tip remover in a situation where an electrode tip is being removed.
[FIG. 9] FIG. 9 shows the state of an electrode tip remover in a situation where the electrode tip has just finished being removed after the situation shown in FIG. 8.

### DESCRIPTION OF EMBODIMENTS

Embodiments of the present invention will now be described in detail with reference to the drawings. Note that the following description of embodiments is merely illustrative in nature.

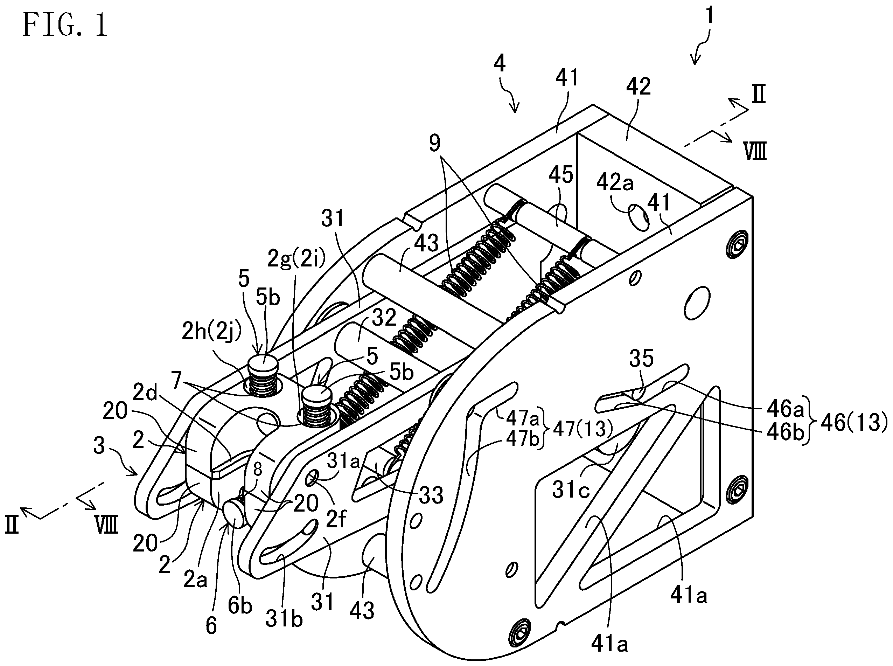

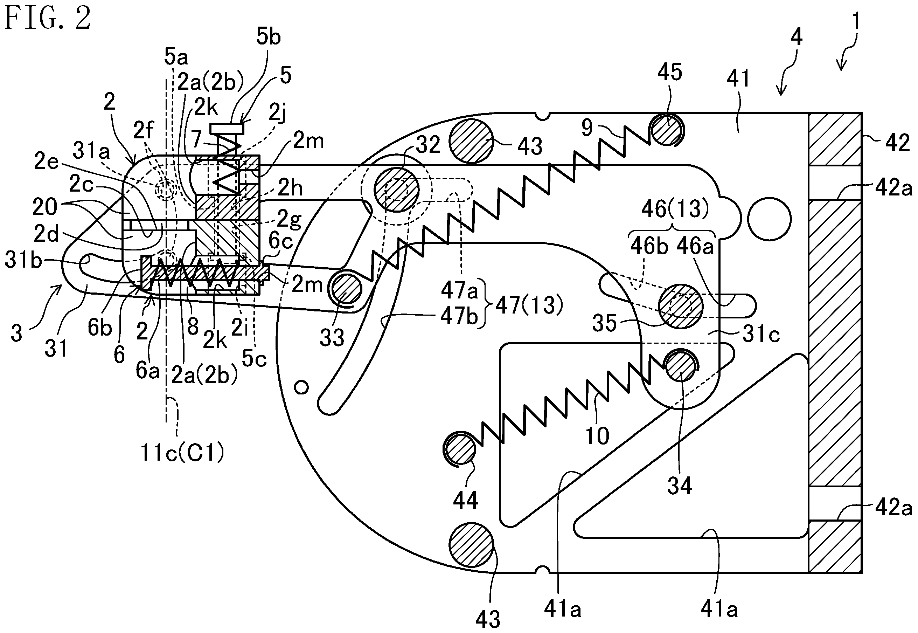

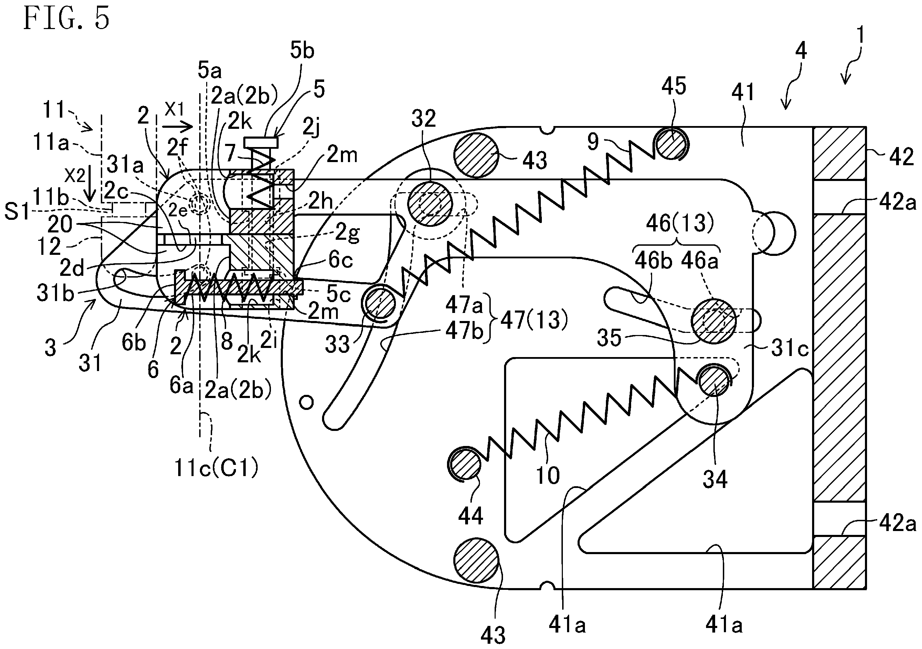

FIGS. 1 and 2 illustrate an electrode tip remover 1 according to an embodiment of the present invention. The electrode tip remover 1 is used to remove an electrode tip 12 from the tip of a welding gun 11 for spot welding mounted to the tip end of an arm of an industrial robot (not shown) as shown in FIGS. 5-7, for example. The electrode tip remover 1 includes a pair of metallic removing members 2 substantially U-shaped as viewed in plan, a metallic rotation arm 3 substantially L-shaped as viewed from the side, and a metallic body frame 4 substantially U-shaped as viewed in plan.

The tip of the welding gun 11 has cylindrical large-diameter and small-diameter portions 11a and 11b having the same center axis 11c and connected to each other.

The electrode tip 12 is fitted to the small-diameter portion 11b such that a gap S1 is formed between the electrode tip 12 and the large-diameter portion 11 a by moving the electrode tip 12 along the direction of extension of the center axis 11c (hereinafter referred to as the center axis direction C1).

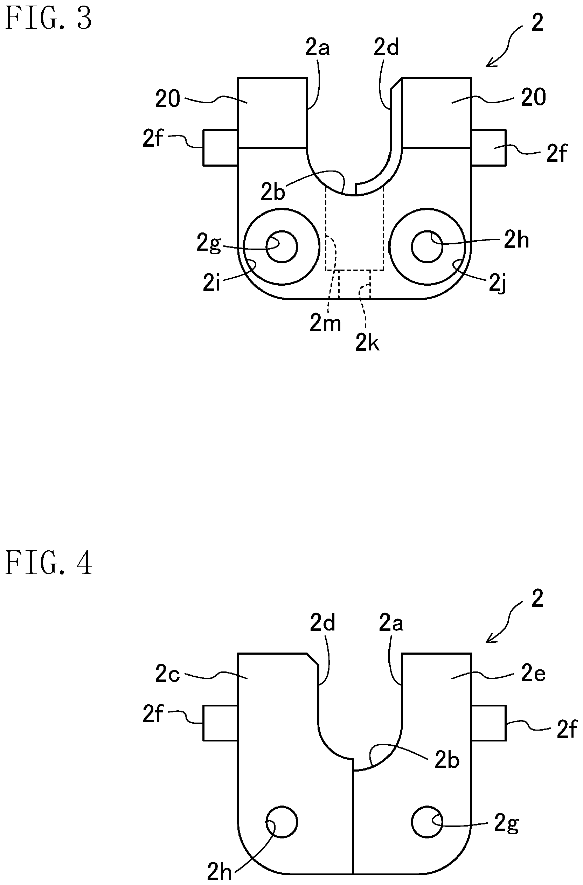

As illustrated in FIGS. 3 and 4, the removing members 2 are each in the shape of a plate having a thickness, and each have a pair of branch portions 20 into which the removing member 2 bifurcates toward its tip end. The removing members 2 are arranged symmetrically such that their back surfaces face each other and such that their tip ends are oriented in the same direction.

Each removing member 2 has a fitting recess 2a opening at its tip end and formed between the branch portions 20.

A half portion of the fitting recess 2a facing away from an opening thereof has a curved surface 2b conforming in shape to the outer peripheral surface of the large-diameter portion 11a or the electrode tip 12. If the large-diameter portion 11a and the electrode tip 12 are brought closer to the removing members 2, the large-diameter portion 11a and the electrode tip 12 are fitted into the fitting recesses 2a.

A half portion of the back surface of each removing member 2 adjacent to one of the branch portions 20 forms a protruding portion 2c with a flat surface.

An edge portion of the protruding portion 2c adjacent to the fitting recess 2a forms a plate-like nail 2d protruding inward of the fitting recess 2a. The nail 2d has a thickness corresponding to that of the gap S1.

A half portion of the back surface of each removing member 2 adjacent to the other branch portion 20 forms a recessed portion 2e connected to the protruding portion 2c. The shape of the surface of the recessed portion 2e corresponds to that of the surface of the protruding portion 2c.

The removing members 2 are arranged symmetrically in the thickness direction of the nails 2d. If the removing members 2 are brought closer to each other in the thickness direction of the nails 2d, the protruding portion 2c of one of the removing members 2 is fitted into the recessed portion 2e of the other removing member 2, and the protruding portion 2c of the other removing member 2 is fitted into the recessed portion 2e of the one of the removing members 2. The nails 2d of the removing members 2 are aligned along the associated fitting recesses 2a. If the large-diameter portion 11a and the electrode tip 12 are brought closer to the fitting recesses 2a in a situation where these removing members 2 are close to each other, the nails 2d of the removing members 2 are inserted at once into the gap S1 in a direction orthogonal to the thickness direction.

Middle portions of outer surfaces of the branch portions 20 of each removing member 2 are respectively provided with a pair of protrusions 2f, which protrude in the directions intersecting with the direction of insertion of the nails 2d into the gap S1 and being opposite to each other.

The pair of protrusions 2f are symmetric with respect to the center axis 11c with the large-diameter portion 11a and the electrode tip 12 fitted into the fitting recesses 2a and with the nails 2d inserted into the gap S 1.

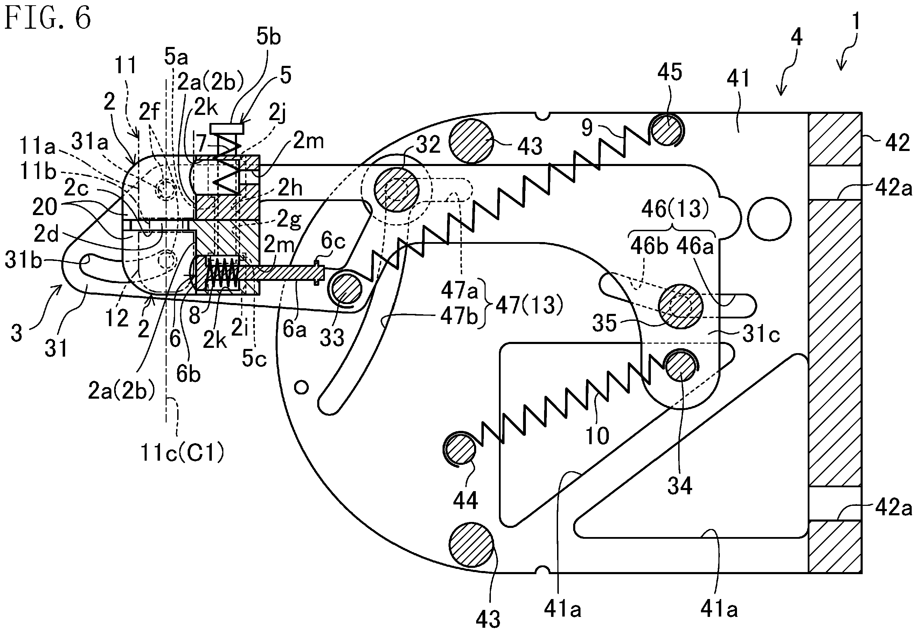

In other words, the large-diameter portion 11a and the electrode tip 12 both fitted into the fitting recesses 2a allow the centers of the protrusions 2f of each removing member 2 to be on the center axis 11c (see FIG. 6).

Each removing member 2 has first and second through holes 2g and 2h passing therethrough in the thickness direction of the nail 2d and corresponding to corners of a base end portion thereof The first and second through holes 2g and 2h respectively have first and second countersunk portions 2i and 2j formed on the front surface of the associated removing member 2.

The first through hole 2g of the one of the removing members 2 and the second through hole 2h of the other removing member 2 correspond in position to each other while the first through hole 2g of the other removing member 2 and the second through hole 2h of the one of the removing members 2 correspond in position to each other. Guide pins 5 are respectively inserted into, and run through, the first and second through holes 2g and 2h facing each other, as illustrated in FIG. 2.

Each guide pin 5 includes an elongated shaft 5a and a disc-shaped head 5b. The shaft 5a is inserted from the one of the removing members 2 into, and run through, the first and second through holes 2g and 2h facing each other, and is prevented from being detached from the removing members 2, by fitting a washer 5c to the tip end of the shaft 5a.

The shaft 5a of each guide pin 5 is provided with a first coil spring 7 wound therearound.

The first coil springs 7 each have two ends, respectively, coming into contact with the head 5b of the associated guide pin 5 and an associated one of the first and second countersunk portions 2i, 2j of the one of the removing members 2. The biasing forces of these first coil springs 7 allow the removing members 2 to be closer to each other.

A base end portion of each removing member 2 has, at its center, a third through hole 2k extending in the direction of insertion of the nail 2d and opening through the inner surface of the fitting recess 2a. The third through hole 2k has a third countersunk portion 2m near the fitting recess 2a.

A slide member 6 is slidably inserted into, and run through, the third through hole 2k of the other removing member 2 in a direction opposite to the direction of insertion of the nail 2d.

The slide member 6 includes an elongated slide shaft 6a and a disc-shaped head 6b. The slide shaft 6a is inserted from the fitting recess 2a into, and run through, the associated removing member 2, and is prevented from being detached from the associated removing member 2, by fitting a washer 6c to the tip end of the slide shaft 6a.

The slide shaft 6a of the slide member 6 is provided with a second coil spring 8 wound therearound.

The second coil spring 8 has two ends, respectively coming into contact with the head 6b of the slide member 6 and the third countersunk portion 2m. The biasing force of the second coil spring 8 allows the slide member 6 to be biased in the direction of insertion of the nails 2d such that the head 6b protrudes beyond the third countersunk portion 2m.

The rotation arm 3 includes a pair of arm plates 31 arranged in a horizontal direction such that the removing members 2 are interposed between the arm plates 31.

One longitudinal end portion of each arm plate 31 has an upper portion having a shaft supporting hole 31a axially supporting an associated one of the protrusions 2f of the one of the removing members 2.

Each arm plate 31 has, below the shaft supporting hole 31a, a first slit 31b (first guide) extending toward one end of the arm plate 31.

Each of the first slits 31b is gently curved such that its central portion is located slightly below both ends of the first slit 31b. Each protrusion 2f of the other removing member 2 is fitted into an associated one of the first slits 31b.

A cylindrical guide shaft 32 is provided between upper portions of longitudinally central portions of the arm plates 31 to bridge the arm plates 31, and has two end portions passing through the respective arm plates 31 to protrude beyond the outer side surfaces of the respective arm plates 31.

A first shaft 33 is arranged obliquely downward of the guide shaft 32 to bridge the arm plates 31.

Each arm plate 31 has, at the other end thereof, an extending portion 31c extending downward. A second shaft 34 is provided between portions of the extending portions 31c closer to the extending ends thereof to bridge the extending portions 31c.

A rotating shaft 35 is provided above the second shaft 34 to bridge the extending portions 31c.

The rotating shaft 35 extends along the direction of extension of the protrusions 2f of the one of the removing members 2, and has two end portions passing through the respective arm plates 31 to protrude beyond the outer side surfaces of the respective arm plates 31.

The body frame 4 includes a pair of first plate-like frames 41 arranged with the rotation arm 3 interposed therebetween and each having one end portion formed in the shape of a substantially semicircular plate, and a second plate-like frame 42 bridging the other end portions of the first plate-like frames 41. The second plate-like frame 42 has a pair of attachment holes 42a used to fix the body frame 4 on, for example, an unshown base and vertically spaced apart from each other.

A pair of third shafts 43 are provided between the first plate-like frames 41 to respectively bridge upper and lower portions of the one end portions of the first plate-like frames 41.

A fourth shaft 44 is provided above a lower one of the third shafts 43 to bridge the first plate-like frames 41.

A fifth shaft 45 is provided between an upper one of the third shafts 43 and the second plate-like frame 42 to bridge the first plate-like frames 41.

The first plate-like frames 41 each have a pair of right triangular through windows 41a between the lower third shaft 43 and the second plate-like frame 42. The pair of through windows 41a have their hypotenuses facing each other.

The first plate-like frames 41 each have a second slit 46 above the through windows 41a.

The second slits 46 each include a horizontal supporting portion 46a extending toward one end of the first plate-like frame 41 in a horizontal direction, and a tilt supporting portion 46b extending obliquely upward from the extending end of the horizontal supporting portion 46a toward the one end of the first plate-like frame 41.

The second slits 46 axially support associated end portions of the rotating shaft 35, which are guided by the associated second slits 46.

The initial position of each of the end portions of the rotating shaft 35 corresponds to the joint between the horizontal supporting portion 46a and the tilt supporting portion 46b.

A portion of each first plate-like frame 41 closer to the one end thereof has an upper half portion having a substantially L-shaped third slit 47.

The third slits 47 each include a horizontal guiding portion 47a extending toward the one end of the first plate-like frame 41 in a horizontal direction, and a tilt guiding portion 47b extending, and being gently curved, downward from the extending end of the horizontal guiding portion 47a toward the one end of the first plate-like frame 41.

The third slits 47 axially support associated end portions of the guide shaft 32, which are guided by the associated third slit 47.

The initial position of each of the end portions of the guide shaft 32 corresponds to the joint between the horizontal guiding portion 47a and the tilt guiding portion 47b.

The space between the first plate-like frames 41 has an upper portion including a pair of third coil springs 9. The pair of third coil springs 9 each have two ends, respectively, connected to the first and fifth shafts 33 and 45, and are arranged in the direction of arrangement of the first plate-like frames 41.

The space between the first plate-like frames 41 has a lower portion including a pair of fourth coil springs 10. The pair of fourth coil springs 10 each have two ends, respectively, connected to the second and fourth shafts 34 and 44, and are arranged in the direction of arrangement of the first plate-like frames 41.

As illustrated in FIG. 5, if the welding gun 11 is moved in the direction X1 to allow the outer peripheral surface of the electrode tip 12 to press the tip end portions of the removing members 2, the horizontal guiding portions 47a guide the guide shaft 32, and the horizontal supporting portions 46a guide the rotating shaft 35. As a result, the rotation arm 3 moves toward the second plate-like frame 42 against the biasing forces of the fourth coil springs 10.

If the welding gun 11 is moved in the direction X2 (to one side in the center axis direction C1) in a situation where the rotation arm 3 has moved toward the second plate-like frame 42, the nails 2d of the removing members 2 corresponds in position to the gap S1 between the large-diameter portion 11a and the electrode tip 12. As illustrated in FIG. 6, the rotation arm 3 moved in the direction away from the second plate-like frame 42 by the biasing forces of the fourth coil springs 10 allows the large-diameter portion 11a and the electrode tip 12 to be respectively fitted into the fitting recesses 2a, and allows the nails 2d to be inserted into the gap S 1.

The insertion of the nails 2d into the gap S1 allows the slide member 6 to come into contact with the outer peripheral surface of the electrode tip 12, thereby sliding the slide member 6 toward the second plate-like frame 42 (in a direction opposite to the direction of insertion of the nails 2d) against the biasing force of the second coil spring 8.

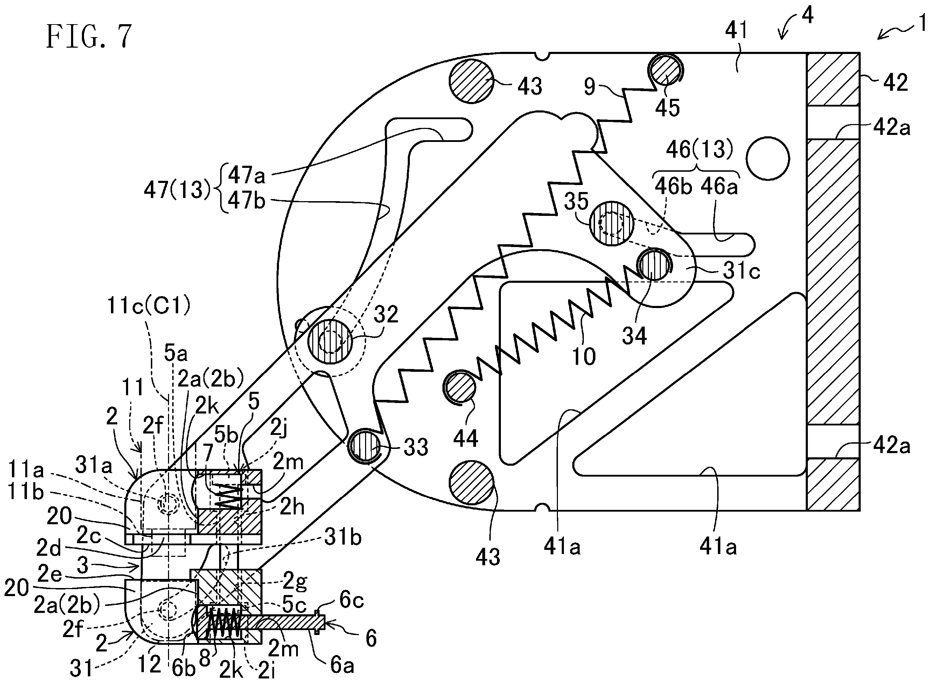

If the welding gun 11 is further moved in the direction X2 (to the one side in the center axis direction C1) with the nails 2d inserted into the gap S1, the large-diameter portion 11a of the welding gun 11 presses the nails 2d in the direction X2, and this pressing action rotates the rotation arm 3 upward (to the other side in the center axis direction C1) about both of the protrusions 2f of the one of the removing members 2 against the biasing forces of the third and fourth coil springs 9 and 10, and rotates the rotation arm 3 downward (to the one side in the center axis direction C1) about the rotating shaft 35. As a result, the first slits 31b respectively guide the protrusions 2f of the other removing member 2 to separate the removing members 2 from each other in the center axis direction C1, as illustrated in FIG. 7.

The separation of the removing members 2 from each other in the center axis direction C1 causes the nail 2d of the other removing member 2 to press the electrode tip 12 in the direction away from the large-diameter portion 11a, and causes the nail 2d of the one of the removing members 2 to press the large-diameter portion 11a, thereby removing the electrode tip 12 from the small-diameter portion 11b.

The second and third slits 46 and 47 constitute a second guide 13 according to the present invention. When the rotation arm 3 rotates, the tilt guiding portions 47b guide the guide shaft 32 while the tilt supporting portions 46b guide the rotating shaft 35. This allows a central portion of each of the removing members 2 between the associated protrusions 2f to move along the center axis 11c.

Next, removal of the electrode tip 12 by the electrode tip remover 1 will be described in detail.

First, the welding gun 11 is moved toward the electrode tip remover 1 in the direction X1 with the electrode tip 12 located below the large-diameter portion 11a and with the center axis 11c oriented vertically, as illustrated in FIG. 5. At this time, the outer peripheral surface of the electrode tip 12 is positioned to correspond to the nails 2d on the tip end portions of the removing members 2 close to each other. Then, the outer peripheral surface of the electrode tip 12 comes into contact with the tip end portions of the removing members 2. As a result, the horizontal guiding portions 47a guide the guide shaft 32 while the horizontal supporting portions 46a guide the rotating shaft 35. This allows the rotation arm 3 to move toward the second plate-like frame 42 against the biasing forces of the fourth coil springs 10.

Next, the welding gun 11 is moved in the direction X2 (to the one side in the center axis direction C1) with the rotation arm 3 moved toward the second plate-like frame 42. Then, the nails 2d of the removing members 2 correspond in position to the gap S1 between the large-diameter portion 11a and the electrode tip 12. As illustrated in FIG. 6, the biasing forces of the fourth coil springs 10 allow the rotation arm 3 to move away from the second plate-like frame 42. As a result, the large-diameter portion 11a and the electrode tip 12 are respectively fitted into the fitting recesses 2a, and the nails 2d are both inserted into the gap S1.

At this time, the outer peripheral surface of the electrode tip 12 comes into contact with the slide member 6. Thus, the slide member 6 slides toward the second plate-like frame 42 against the biasing forces of the third coil springs 9.

Thereafter, the welding gun 11 is further moved in the direction X2 (to the one side in the center axis direction C1). This allows the large-diameter portion 11a of the welding gun 11 to press both of the nails 2d in the direction X2 as illustrated in FIG. 7. This pressing action starts rotating the rotation arm 3 upward (to the other side in the center axis direction C1) about both of the protrusions 2f of the one of the removing members 2 and rotating the rotation arm 3 downward (to the one side in the center axis direction C1) about the rotating shaft 35, against the biasing forces of the third and fourth coil springs 9 and 10, while the guide shaft 32 and the rotating shaft 35 are respectively guided by both of the tilt guiding portions 47b and both of the tilt supporting portions 46b.

The start of rotation of the rotation arm 3 allows the protrusions 2f of the other removing member 2 to be guided through the associated first slits 31b, thereby separating the other removing member 2 from the one of the removing members 2 in the center axis direction C1. Thus, the electrode tip 12 is pressed in such a direction to enable the nail 2d of the other removing member 2 to be separated from the large-diameter portion 11a, and the nail 2d of the one of the removing members 2 is pressed against the large-diameter portion 11a, thereby removing the electrode tip 12 from the small-diameter portion 11b.

During this removal, the guide shaft 32 and the rotating shaft 35 are respectively guided by both of the tilt guiding portions 47b and both of the tilt supporting portions 46b, and the protrusions 2f of the other removing member 2 are further guided through the associated first slits 31b. As a result, a central portion of each of the removing members 2 between the associated protrusions 2f moves along the center axis 11c. Thus, the rotation of the rotation arm 3 allows the pair of protrusions 2f of each removing member 2 to always apply force from the removing member 2 to the large-diameter portion 11a and the electrode tip 12 along the cross section passing through the center axis 11c of the large-diameter portion 11a and electrode tip 12 from the start of the removal to the end of the removal. Thus, during this removal, no force is applied to the large-diameter portion 11a and the small-diameter portion 11b in the direction intersecting with the center axis 11c of the large-diameter portion 11a and small-diameter portion 11b. This may prevent the large-diameter and small-diameter portions 11a and 11b from being deformed or damaged, and may eliminate the need for excess force during a removal action.

If the removing members 2 are brought closer to the large-diameter portion 11a and electrode tip 12, the nails 2d are both inserted into the gap S1 between the large-diameter portion 11a and the electrode tip 12, and the large-diameter portion 11a and the electrode tip 12 are fitted into the associated fitting recesses 2a. Thus, when the removing members 2 are separated from each other, the large-diameter portion 11 a and the electrode tip 12 are supported by the associated fitting recesses 2a. This allows the removing members 2 to be separated from each other with stability, resulting in smooth removal of the electrode tip 12.

The electrode tip remover 1 according to the present invention is used with the electrode tip 12 of the welding gun 11 located below the large-diameter portion 11a and with the center axis 11c oriented vertically, but may also be used with the electrode tip 12 of the welding gun 11 located above the large-diameter portion 11a and with the center axis 11c oriented vertically.

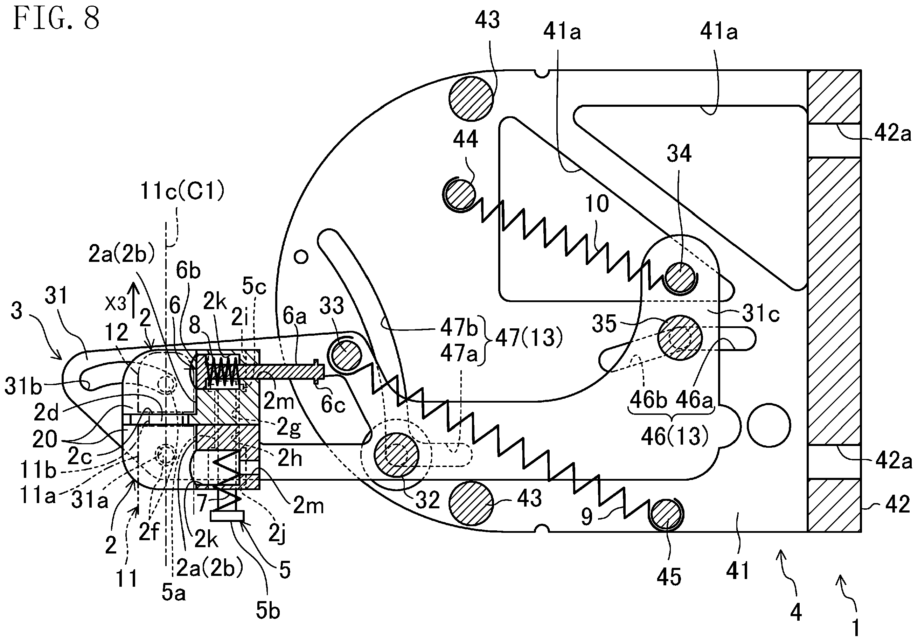

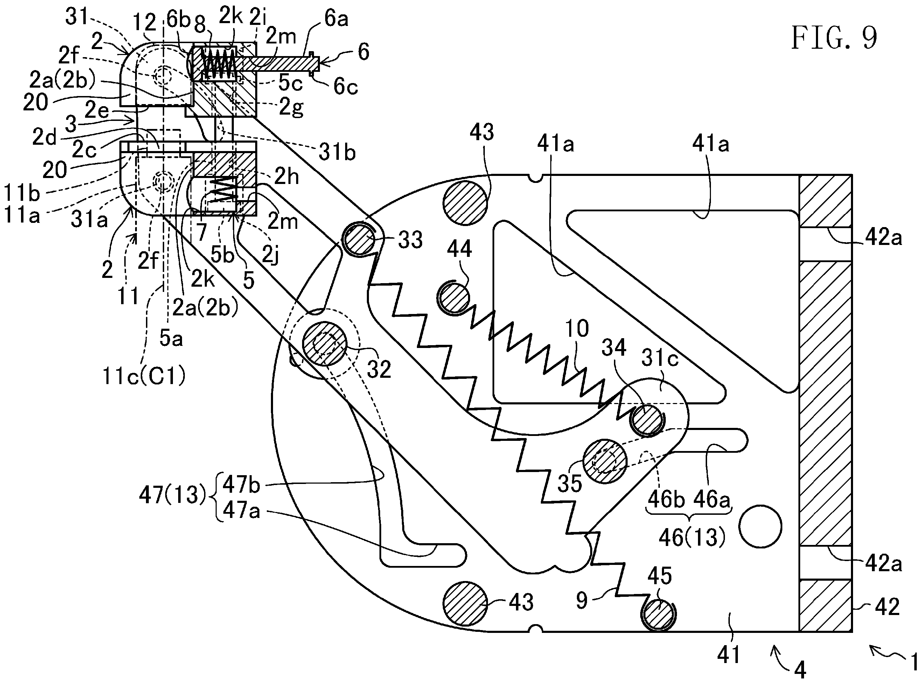

In this embodiment, the electrode tip remover 1 according to the embodiment of the present invention may be used upside down as illustrated in FIGS. 8 and 9. Removal of the electrode tip 12 by the electrode tip remover 1 turned upside down will now be described in detail.

First, as illustrated in FIG. 8, an industrial robot (not shown) that performs a removal action is operated to insert the nails 2d into the gap S1 with the electrode tip 12 of the welding gun 11 located above the large-diameter portion 11a and with the center axis 11c oriented vertically and to slide the slide member 6 toward the second plate-like frame 42.

In this situation, the welding gun 11 is moved in the direction X3 (to one side in the center axis direction C1). This allows the large-diameter portion 11a of the welding gun 11 to press both of the nails 2d in the direction X3 as illustrated in FIG. 9. This pressing action starts rotating the rotation arm 3 downward (to the other side in the center axis direction C1) about both of the protrusions 2f of the one of the removing members 2 and rotating the rotation arm 3 upward (to the one side in the center axis direction C1) about the rotating shaft 35, against the biasing forces of the third and fourth coil springs 9 and 10, while the guide shaft 32 and the rotating shaft 35 are respectively guided by both of the tilt guiding portions 47b and both of the tilt supporting portions 46b.

The start of rotation of the rotation arm 3 allows the protrusions 2f of the other removing member 2 to be guided through the associated first slits 31b, thereby separating the other removing member 2 from the one of the removing members 2 in the center axis direction C 1. Thus, the electrode tip 12 is pressed in such a direction to enable the nail 2d of the other removing member 2 to be separated from the large-diameter portion 11a, and the nail 2d of the one of the removing members 2 is pressed against the large-diameter portion 11a, thereby removing the electrode tip 12 from the small-diameter portion 11b.

At this time, the electrode tip 12 removed is left while being placed on the nail 2d of the other removing member 2. However, the electrode tip 12 then falls from the other removing member 2, because the biasing force of the second coil spring 8 allows the slide member 6 to press the electrode tip 12 in the direction of insertion of the nails 2d. As a result, the electrode tip 12 removed from the small-diameter portion 11b may be easily eliminated from the other removing member 2 without interfering with the following removal action.

The first slits 31b according to the embodiment of the present invention may be each in the shape of a groove.

The removing members 2 according to the embodiment of the present invention each include the single nail 2d. However, this is only an example of the present invention. The removing members 2 may each include two or more nails 2d.

### INDUSTRIAL APPLICABILITY

The present invention is suitable for an electrode tip remover configured to remove an electrode tip, mounted to a tip of a welding gun for use in spot welding, from the tip of the welding gun.

### DESCRIPTION OF REFERENCE CHARACTERS

- 1: Electrode Tip Remover
- 2: Removing Member
- 2a: Fitting Recess
- 2d: Nail
- 2f: Protrusion
- 3: Rotation Arm
- 4: Body Frame
- 6: Slide Member
- 8: Second Coil Spring (Biasing Member)
- 11: Welding Gun
- 11a: Large-Diameter Portion
- 11b: Small-Diameter Portion
- 11c: Center Axis
- 12: Electrode Tip
- 13: Second Guide
- 31b: First Slit (First Guide)
- 35: Rotation Axis
- C1: Center Axis Direction
- S1: Gap

## Claims

1. An electrode tip remover for removing an electrode tip from a welding gun for use in spot welding, the welding gun having a cylindrical large-diameter portion and a cylindrical small-diameter portion that has the same center axis as, and is connected to, the large-diameter portion, the electrode tip being fitted to the small-diameter portion such that a gap is formed between the electrode tip and the large-diameter portion by moving the electrode tip along a center axis direction of the large-diameter and small-diameter portions, the electrode tip remover comprising:
a pair of removing members each having a nail and a pair of protrusions, the nail being formed in a shape of a plate and being capable of being inserted into the gap in a direction orthogonal to a thickness direction of the nail, the pair of protrusions protruding in directions away from each other and being arranged symmetrically with respect to the center axis with the nail inserted into the gap, the pair of removing members being arranged symmetrically in the thickness direction of the nail;
a rotation arm having two ends, one of the two ends axially supporting the protrusions of one of the removing members, the other one of the two ends including a rotating shaft extending in a direction identical to a direction of extension of the protrusions of the one of the removing members; and
a body frame axially supporting the rotating shaft of the rotation arm, wherein
the rotation arm has, at the one of the two ends, a pair of first guides configured to guide the associated protrusions of the other one of the removing members such that the removing members are separated from each other in the center axis direction by inserting both of the nails of the removing members close to each other into the gap and pressing both of the removing members to one side in the center axis direction with either the large-diameter portion or the electrode tip to rotate the rotation arm to the other side in the center axis direction about both of the protrusions of the one of the removing members and to rotate the rotation arm to the one side in the center axis direction about the rotating shaft, and
the body frame has a second guide configured to guide the rotation arm such that when the rotation arm rotates, a central portion of each removing member between the associated protrusions moves along the center axis.

2. The electrode tip remover of claim 1, wherein
the removing members each have a fitting recess which opens at a tip end of the removing member and into which the large-diameter portion or the electrode tip is fitted such that if the large-diameter portion and the electrode tip are brought closer to the removing members, the center axis passes through the central portion of the removing member between the associated protrusions, and
the nails are provided in the fitting recesses such that a direction of insertion of the nails is opposite to a direction in which the large-diameter portion or the electrode tip is fitted.

3. The electrode tip remover of claim 1 or 2, wherein
an upper one of the removing members includes a slide member and a biasing member, the slide member being configured to, when the nails of the removing members close to each other are both inserted into the gap, come into contact with the electrode tip to slide in a direction opposite to the direction of insertion of the nails, the biasing member being configured to bias the slide member in the direction of insertion of the nails.
